Europäisches Patentamt

European Patent Office

Office européen des brevets

(11) Publication number: **0 396 071 A2**

# EUROPEAN PATENT APPLICATION

(21) Application number: **90108178.6**

(22) Date of filing: **28.04.90**

(51) Int. Cl.5: **G01C 23/00**

(30) Priority: **02.05.89 US 346888**

(43) Date of publication of application:
**07.11.90 Bulletin 90/45**

(84) Designated Contracting States:
**DE FR GB IT**

(71) Applicant: **HONEYWELL INC.**
**Honeywell Plaza**
**Minneapolis MN 55408(US)**

(72) Inventor: **Milo, Paul A.**
**3213 W. Topeka Drive**
**Phoenix, AZ 85027(US)**
Inventor: **Lynch, Frederick W.**
**3321 West Kings Avenue**
**Phoenix, AZ 85023(US)**

(74) Representative: **Rentzsch, Heinz et al**
**Honeywell Europe S.A. Holding KG Patent &**
**License Dept. Postfach 10 08 65**
**Kaiserleistrasse 39**
**D-6050 Offenbach am Main(DE)**

(54) **Apparatus and method for an aircraft display exhibiting vertical speed, traffic awareness, and collision resolution advisories.**

(57) An aircraft vertical speed indicator is provided with the capability of displaying the relative position of other aircraft within a predetermined distance of the monitoring aircraft, the other aircraft being represented on the display by symbol characters (101, 109) and associated alpha/numeric information. When one of the other aircraft poses an immediate threat of collision, the character symbol representing the threatening aircraft on the display is changed and the color of the character symbol is color changed to facilitate identification of the threatening aircraft. The immediate threat of collision also causes two separate color regions (120, 121) to be displayed in conjunction with the vertical airspeed scale (103). The region (120) having a first color designates, on the vertical airspeed scale, the vertical airspeeds available to the monitoring aircraft that will result in collision of the two aircraft. The region (121) having the second color designates, on the vertical airspeed scale, vertical speeds that avoid the threatened collision.

FIG. 1B.

# APPARATUS AND METHOD FOR AN AIRCRAFT DISPLAY EXHIBITING VERTICAL SPEED, TRAFFIC AWARENESS, AND COLLISION RESOLUTION ADVISORIES

This invention relates generally to avionics apparatus, and, more particularly, to the apparatus for use in traffic alert and collision avoidance systems.

As technological advances have resulted in dramatic increases in the size and the performance of aircraft, the margin for error in the operation of an aircraft has been reduced and the consequences of any accident have become potentially disastrous. In order to assist the flight deck in the operation of an aircraft, the information available to the flight deck has been greatly expanded by a multiplicity of visual and audible signalling apparatus responsive to incoming signals and status sensor information. U.S. Patent 3,890,614 entitled "Integrated Radar-Pneumatic Altimeter Display Device", describes a display unit for simultaneously displaying barometric derived altimeter reading and radar derived altimeter readings. U.S. Patent 3,944,729 entitled "Stabilized Terrain Optical Position Sensor", describes a display system in which a display screen has an upper image display the field before the aircraft (helicopter) and a lower image viewed directly toward the ground. The ground view image is stabilized and symbols are added which provide information with respect to flight characteristics. U.S. Patent 4,008,618 entitled "Flight Instrument" describes an electromechanical display for displaying barometric derived pressure with a rotating pointer and includes apparatus for entering the corrections. U.S. Patent 4,247,843 entitled "Aircraft Flight Instrument Display System" provides an integrated display for flight path control and command parameters such as attitude and magnetic headings, vertical speed, critical take-off speeds, flight path angle, etc. U.S. Patent 4,250,746 entitled "Aircraft Instrument", describes a vertical speed indicator that includes provision for measuring wind shear. U.S. Patent 4,326,189 entitled "Aircraft Control/Guidance Display and Mechanism for Enroute and Landing Utility", describes a display unit for providing roll, pitch and heading information to the pilot in a manner similar to view of the pilot through the windshield. U.S. Patent 4,539,843 entitled "Altimeter and Vertical Speed Indicator", describes a display apparatus for indicating the altitude and the vertical air speed in a digital format. Japanese Patent 61-79179(A), issued on April 22, 1986 and entitled "Warning Air Area Display System of Aircraft Collision Preventing Equipment", describes a technique for expanding a display area simulating a region forward of an aircraft by an amount related to the aircraft speed. U.S. Patent 4,604,711 and entitled "Aircraft Flight Display System", describes a display system for use with a cathode ray tube unit in which a processing system relates sensor and incoming data signal in a format convenient for the pilot.

Recently, the increased use of commercial airline facilities and the increased activity in private aviation has focused attention on the problem of aircraft collisions. Requirements are either in place or are proposed that would provide a visual display available to the flight deck of the aircraft traffic in the vicinity and require identification aircraft traffic having a high risk of collision with the monitoring aircraft. While certain aspects of monitoring aircraft traffic are simplified by the use of transponders exchanging flight data between aircraft, the problem of providing a suitable location for the new display screen in the aircraft cockpit environment, an environment in which too many displays already compete for the attention of the flight deck, has remained.

A need has therefore been felt for a display unit that can replace an existing avionics display while permitting information with respect to the aircraft traffic and potential collision threats to be effectively communicated to the pilot.

It is an object of the present invention to provide improved avionics apparatus, and in particular to incorporate in a display specifying the vertical speed of an aircraft, information relating to a potential collision situation.

It is another feature of the present invention to incorporate in a display specifying the vertical speed of an aircraft, information relating to avoidance of a collision situation.

The aforementioned and other features are attained, according to the present invention, by providing an aircraft with a vertical speed indicator in which the vertical scale specifying the vertical airspeed of the aircraft has a scale having a first color (typically white) when the aircraft is not in imminent danger of collision. In addition, the vertical speed indicator is provided with character symbols and associated alpha/numeric characters that indicate the relative position of aircraft traffic in the vicinity of the monitoring aircraft. When the avionics processing apparatus determines that a collision is imminent, the character symbol representing aircraft presenting the danger changes and the color of the character symbol changes to second color (typically red) on the display screen. In the presence of an imminent collision, the portion of the indicator scale specifying the vertical speed range which will maintain the monitoring aircraft in a collision mode has a region displaying the second color illuminated therewith, while the indicator scale specifying the vertical speeds that will remove the monitoring aircraft from the danger of collision display a region having a third color (typically green) associated therewith. The display unit screen is a flat panel liquid crystal device and the unit is fabricated to replace the single function vertical air speed indicator typically used with aircraft.

These and other features of the invention will be understood upon reading of the following description along with the drawings. Preferred details are described in the dependent claims.

## BRIEF DESCRIPTION OF THE DRAWINGS

Figure 1A illustrates the display unit screen providing the vertical speed and aircraft traffic information according to the present invention in the absence of a potential collision.

Figure 1B illustrates the display unit screen providing vertical speed, aircraft traffic, and conflict resolution information according to the present invention.

Figure 2 is a block diagram of the apparatus for providing information to the display unit.

## DESCRIPTION OF THE PREFERRED EMBODIMENT

### 1. Detailed Description of the Figures

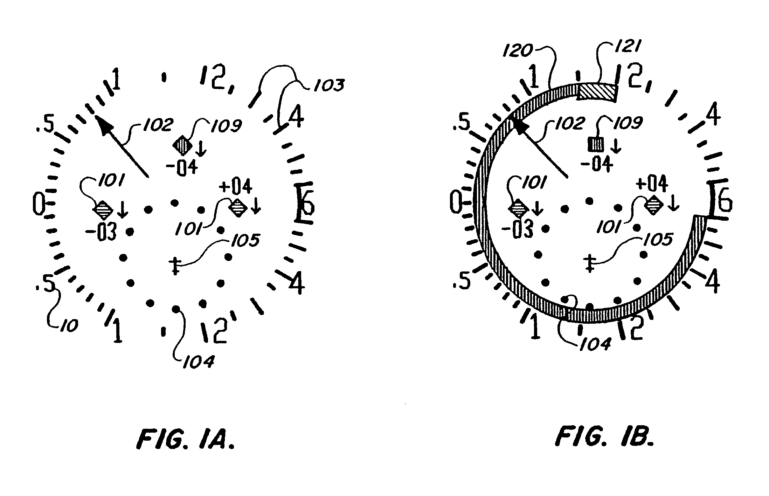

Referring now to Fig. 1A, the face of the display unit providing visual information concerning the vertical speed of the aircraft and information concerning aircraft traffic in the vicinity of the aircraft is illustrated. The symbols and characters 103 determine the calibration of vertical speed scale. The pointer 102 designates the current vertical speed of the aircraft. Icons 101 and icon 109 represent aircraft in the vicinity of the monitoring aircraft. The arrows associated with the icons indicate the direction of vertical flight and the signed alpha/numeric characters associated with each icon indicate the relative vertical displacement of the aircraft being identified to the monitoring aircraft. The relative position of the monitoring aircraft on the display is given by icon 105 and the points 104 provide a scale for estimating the relative distance between the monitoring aircraft, represented by icon 105 and the other aircraft represented by icons 101 and icon 109.

Referring next to Fig. 1B, the situation is illustrated wherein the aircraft represented by icon 109 is determined to be on a collision course with the monitoring aircraft. The icon 109 and the associated information are displayed in a color representing danger, typically red. The scale of the vertical speed indicator has a band 120 imposed thereon in the color representing danger that designates vertical speeds that may result in a collision and should therefore be avoided. A second band 121 is imposed on the scale representing vertical speeds that will avoid the collision. This band is displayed in a second color, typically green.

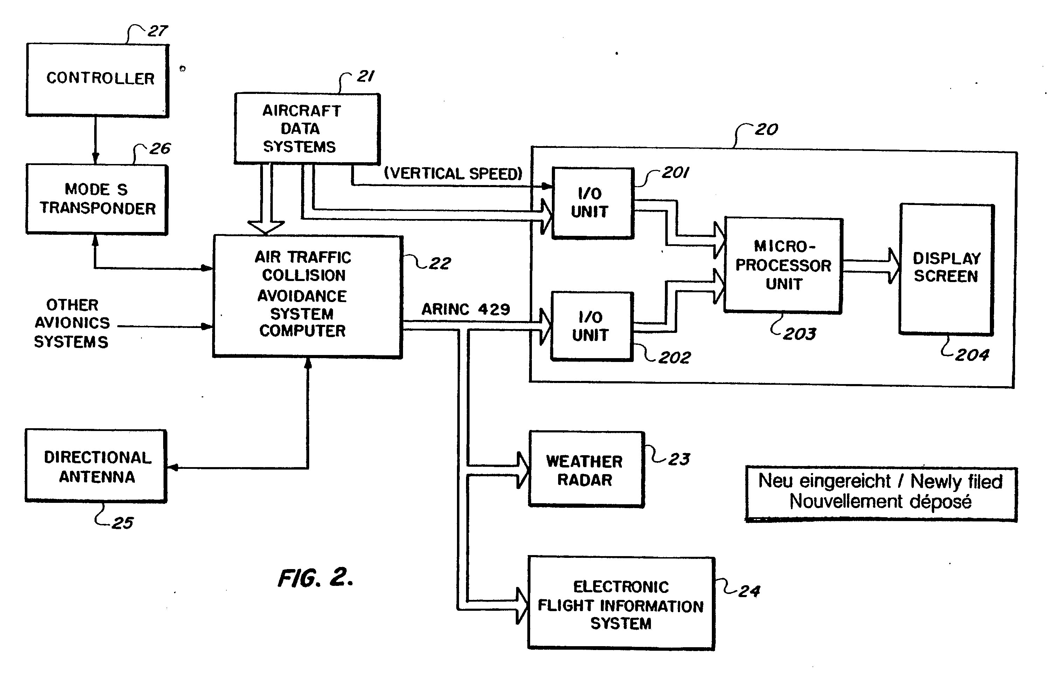

Referring next to Fig. 2, the system which can produce the display screens of the Fig. 1A and Fig. 1B is shown. The display unit 20 includes a first I/O unit 201 and second I/O unit 202. The two I/O units 201 and 202 act as buffer units for signals from the avionics apparatus applied to the display unit. The signals from the I/O units 201 and 202 are applied to microprocessor unit 203. In the preferred embodiment, the microprocessor unit 203 is a graphics processor (e.g., Texas Instruments 34010) and is used to provide the signals determining the image displayed on display screen 204. In the preferred embodiment, the display screen includes a high resolution, color liquid crystal display, the liquid crystal display of the preferred embodiment being arranged in a matrix of pixel elements enabled by appropriate row and column driver circuits. The I/O unit 201 receives vertical speed and other signals from the aircraft data systems 21. The aircraft data systems 21 include the sensors that determine the flight parameters of the aircraft. The signals from the aircraft data systems 21 are also applied to the traffic collision avoidance system computer 22. The avoidance system computer 22 includes apparatus and programs for executing preselected algorithms. The avoidance system computer 22 also receives signals from the mode S transponder, the mode S transponder 26 acting in response to control signals from controller 27. The mode S transponder 26 provides the interaircraft exchange of data, each aircraft transmitting flight data. The avoidance system computer compares the data received from other aircraft with the data from the aircraft data systems 21 to determine when a collision is imminent. The avoidance system computer 22 applies signals representing the results of the these calculations to the I/O unit 202 for display on the display screen. The avoidance system computer receives signals from the directional antenna 25 and from other avionics systems. Signals from the avoidance system 22 may also be applied to the weather radar and to the electronic flight information system.

### 2. Operation of the Preferred Embodiment

The display of the present invention permits local aircraft traffic to be monitored on the vertical speed display. Key information and particularly the relative location of the other aircraft in the vicinity of the monitoring aircraft are incorporated in the display. When a possible collision aircraft is identified, the display indicates the vertical speeds of the monitoring aircraft that will result in a collision as well as the vertical speeds that will avoid a collision. In addition, the color of the icons can be used to provide additional information concerning the local aircraft traffic. In the preferred embodiment, as indicated previously, the red color indicates an impending collision within 30 seconds. A separate icon configuration (a square) is also used to distinguish the threatening aircraft from the remainder of the icons being displayed. When the icon is provided with a yellow color, then a possible problem is identified and a collision potential within 45 seconds is identified. The icon configuration for the possible problem aircraft is a circle. For aircraft not considered to be a threat to the monitoring aircraft, a cyan color and a diamond icon configuration is used in the preferred embodiment.

The use of the flat panel liquid crystal display results in a more compact unit, permitting the display unit of the present invention to replace the typical vertical speed indicator while providing the increased functionality.

The foregoing description is included to illustrate the operation of the preferred embodiment and is not meant to limit the scope of the invention. The scope of the invention is to be limited only by the following claims. From the foregoing description, many variations will be apparent to those skilled in the art that would yet be encompassed by the spirit and scope of the invention.

**Claims**

1. A display apparatus in an aircraft for providing both vertical speed information and aircraft traffic advisory information, said display apparatus, **characterized by:**

a) a scale (103) having a first color indicating a range of vertical speeds for said aircraft, said scale including a marker (102) indicating current vertical airspeed of said aircraft;

b) first means (203) responsive to first input signals for imposing a second color region (120) proximate with a first portion of said scale in response to identification of a second aircraft on a collision course with said aircraft, said second color region (120) indicating vertical speeds for said aircraft that may result in a collision with said second aircraft; and

c) second means (203) responsive to said first input signals for displaying a third color region (121) simultaneously with said second color region (120), said third color region proximate a second portion of said scale, said third color region (121) indicating vertical speeds for said aircraft that will avoid a collision with said second aircraft.

2. The display apparatus of Claim 1, **characterized by**

a) a first icon (105) representing said aircraft; and

b) third means responsive to said first input signals for displaying a second icon (101, 109) indicating a position of said second aircraft relative to said aircraft.

3. The display apparatus of Claim 2, **characterized in that**

a) said third means includes color means for displaying said second icon (101, 109) having a first configuration (109, Fig. 1B) and said second color when said second aircraft is on a potential collision trajectory with said aircraft, and

b) said second icon having a second configuration (109, Fig. 1A) and a fourth color when said aircraft is not on a collision trajectory.

4. The display apparatus of Claim 3, **characterized in that** said second icon (101, 109) has associated alpha/numeric data associated therewith designating relative vertical displacement between said aircraft and said second aircraft and designating at least an absolute direction of vertical flight of said second aircraft.

5. The display apparatus of Claim 2, 3 or 4, **characterized in that** said third means provides said second icon (101, 109) with said second color when said collision is predicted to occur between a first preselected time and a second preselected time, said third means providing said second icon with an indicia indicating that said collision is predicted to occur in a time less than said first preselected time.

6. A method of displaying vertical speed, potentially collision threatening aircraft traffic, and collision resolution advisory information for an aircraft, said method **characterized by:**

a) displaying a vertical airspeed scale (103) on a first portion of a display screen;

b) when an imminent collision between said aircraft and a second aircraft is identified, displaying a first color region (120) on said display screen proximate said vertical airspeed scale (103) designating vertical airspeeds that will result in said collision;

c) when said imminent collision is identified, displaying a second color region (121) on said display screen proximate said vertical airspeed scale (103) designating vertical airspeeds that will avoid said collision; and

d) in a second portion of said display screen, displaying an icon (109) representing said second aircraft, a position of said icon relative to a predetermined point (105) on said display screen indicating a relative position of said second aircraft to said aircraft.

7. The method of Claim 6, **characterized in that:**

a) said icon (109) has a first configuration (Fig. 1B) and said first color when said imminent collision is identified;

b) said icon having a second configuration (Fig. 1A) and a third color when said collision is not imminent;

c) said icon having a third color when said collision is predicted to occur in less than a preselected time.

8. A display apparatus for use in an aircraft, said display apparatus **characterized by:**

a) a status means (21) for providing first signals identifying flight parameters of said aircraft;

b) transponder means (22, 26) responsive to signals from a second aircraft for providing second signals identifying flight parameters of said second aircraft;

c) processing means (203) responsive to said first and said second signals for determining when a collision is imminent; and

d) display means (204) responsive to signals from said processing means and said first signals, said display means including a display screen (Fig. 1A, 1B) with a first portion having a vertical airspeed scale (103) and a marker (102) identifying a vertical airspeed of said aircraft, said first portion including a first region (120) having a first color proximate said vertical airspeed scale when a collision is predicted between said aircraft and said second aircraft, said first region identifying vertical speeds which will result in a collision between said aircraft and said second aircraft, said first portion including a second region (121) having a second color proximate said vertical airspeed scale when said collision is predicted, said second region identifying vertical speeds which will result in avoiding said collision between said aircraft and said second aircraft, said display screen having a second portion displaying a position (101, 105, 109) of said second aircraft relative to said aircraft.

9. The display apparatus of Claim 8, **characterized in that** said first portion has a first icon (105) representing said aircraft and a second icon (101, 109) representing said second aircraft, wherein a relative position of said first icon (105) and said second icon (101, 109) indicates a relative position of said aircraft and said second aircraft.

10. The display apparatus of Claim 9, **characterized in that** said second icon (109, Fig. 1B) has a first configuration and a first color when said collision between said aircraft and said second aircraft is identified by said processing means, said second icon having a second configuration (109, Fig. 1A) and a second color when said collision between said aircraft and said second aircraft has not been identified, said second icon having a third color when said collision is predicted to occur within a preselected time.

11. The display apparatus of Claim 10, **characterized in that** said second portion displays icons representing each aircraft within a predetermined distance (104) of said aircraft.

12. The display apparatus of Claim 6, 7 or 11, **characterized in that:**

a) each icon has displayed therewith an alpha/numeric data, said alpha/numeric data identifying selected flight parameters associated with said each aircraft; and

b) said vertical airspeed scale (103) includes marker (102), said marker designating a current airspeed of said aircraft.

FIG. IA.

FIG. IB.

EP 0 396 071 A2

FIG. 2.

CONTROLLER — 27

AIRCRAFT DATA SYSTEMS — 21

MODE S TRANSPONDER — 26

OTHER AVIONICS SYSTEMS

AIR TRAFFIC COLLISION AVOIDANCE SYSTEM COMPUTER — 22

DIRECTIONAL ANTENNA — 25

(VERTICAL SPEED)

I/O UNIT — 201

I/O UNIT — 202

ARINC 429

MICRO-PROCESSOR UNIT — 203

DISPLAY SCREEN — 204

— 20

WEATHER RADAR — 23

ELECTRONIC FLIGHT INFORMATION SYSTEM — 24

Neu eingereicht / Newly filed
Nouvellement déposé

EP 0 396 071 A2